# EUROPEAN PATENT APPLICATION

(11) **EP 4 468 466 A1**
(43) Date of publication of application: **27.11.2024**
(21) Application number: 23903655.1
(22) Date of filing: 18.07.2023
(51) Int. Cl.: H01M 10/658, H01M 50/30, H01M 50/204, H01M 50/209, H01M 50/24

(54) **BATTERY MODULE WITH REINFORCED SAFETY**

(30) Priority: 12.12.2022 KR 20220172497; 23.03.2023 KR 20230038231
(71) Applicant: LG Energy Solution, Ltd., Seoul 07335 (KR)
(72) Inventor: JANG, Sung-Hwan, Daejeon 34122 (KR); KIM, Kwang-Mo, Daejeon 34122 (KR); PARK, Min-Soo, Daejeon 34122 (KR); LEE, Jung-Hoon, Daejeon 34122 (KR); JUNG, Hye-Mi, Daejeon 34122 (KR)
(74) Representative: Plasseraud IP
(86) International application number: PCT/KR2023/010331
(87) International publication number: WO 2024/128450

(57) **Abstract**

A battery module according to an embodiment of the present disclosure includes a cell assembly including a plurality of battery cells, a module case having an internal space and a venting hole, wherein the cell assembly is received in the internal space, an inner fire resistant sheet interposed between the module case and the cell assembly, and an outer fire resistant sheet configured to cover at least a portion in which the venting hole is formed outside of the module case.

## Description

### TECHNICAL FIELD

The present disclosure relates to a battery, and more particularly, to a safety reinforced battery module and a battery pack and a vehicle comprising the same.

The present application claims priority to Korean Patent Application No. 10-2022-0172497 filed on December 12, 2022 and Korean Patent Application No. 10-2023-0038231 filed on March 23, 2023 in the Republic of Korea, the disclosures of which are incorporated herein by reference.

### BACKGROUND ART

With a rapid increase in demand for portable electronic products such as smartphones, laptop computers and wearable devices and widespread use of robots and electric vehicles, many studies are being made on high performance secondary batteries that can be recharged repeatedly.

Currently, commercially available secondary batteries include nickel-cadmium batteries, nickel-hydrogen batteries, nickel-zinc batteries, lithium secondary batteries and the like, and among them, lithium secondary batteries have little or no memory effect, and thus they are gaining more attention than nickel-based secondary batteries for their advantages that recharging can be done whenever it is convenient, the self-discharge rate is very low and the energy density is high.

Secondary batteries include an electrode assembly including a positive electrode plate and a negative electrode plate coated with a positive electrode active material and a negative electrode active material, respectively, with a separator interposed between the positive electrode plate and the negative electrode plate and an outer packaging or a battery case accommodating the electrode assembly together with an electrolyte solution in an airtight manner.

In general, secondary batteries may be classified into can-type secondary batteries in which the electrode assembly is included in a metal can and pouch-type secondary batteries in which the electrode assembly is included in a pouch of an aluminum laminate sheet according to the shape of the outer packaging or battery case.

Recently, secondary batteries are widely used as power source or energy storage for not only small devices such as mobile electronic devices but also medium- and large-scale devices such as electric vehicles or Energy Storage Systems (ESS). Secondary batteries may be electrically connected and received in a module case to form a battery module. Additionally, battery modules may be connected to form a battery pack.

In the case of the above-described type of battery module or battery pack, thermal events such as thermal runaway may occur in the battery cell included therein. When abnormal events occur, venting gases may be produced from the battery cell. In this instance, proper gas venting is required, and in case where fast gas venting fails, grave problems may occur such as explosion of the battery module or the battery pack.

Additionally, since venting gases are very hot and rise from flames or sparks, venting gas control failures may result in thermal runaway in other adjacent battery cell or other battery module. In this case, thermal runaway may spread between cells or modules or become more severe. Moreover, since the battery cells or the battery modules are densely packed in a narrow space, in case where it fails to properly control venting gases or flames, the problems caused by thermal runaway may become more serious.

### SUMMARY

### Technical Problem

The present disclosure is designed to solve the above-described problem, and therefore the present disclosure is directed to providing a battery module with improved safety by effectively suppressing thermal runaway propagation and a battery pack and a vehicle comprising the same.

The technical problem to be solved by the present disclosure is not limited to the above-described problems, and these and other problems will be clearly understood by those skilled in the art from the following description.

### Technical Solution

To solve the above-described problem, a battery module according to an embodiment of the present disclosure includes a cell assembly including a plurality of battery cells; a module case having an internal space and a venting hole, wherein the cell assembly is received in the internal space; an inner fire resistant sheet interposed between the module case and the cell assembly; and an outer fire resistant sheet configured to cover at least a portion in which the venting hole is formed outside of the module case.

Preferably, the plurality of battery cells may be configured to vent venting gases through a top sealing portion.

In an aspect of the present disclosure, a plurality of the venting holes may be formed in an upper side of the module case.

In another aspect of the present disclosure, the cell assembly may include the plurality of battery cells arranged in a horizontal direction.

In this instance, the inner fire resistant sheet may be configured to cover an upper side of the cell assembly.

In another aspect of the present disclosure, the inner fire resistant sheet may have a first vent at a location corresponding to the venting hole.

Preferably, the first vent may include a mesh.

In another aspect of the present disclosure, the outer fire resistant sheet may include a top sheet covering a top of the module case; and a side sheet covering a side of the module case.

In another aspect of the present disclosure, the outer fire resistant sheet may have a second vent at a location corresponding to the venting hole.

Preferably, the outer fire resistant sheet may be configured to keep the second vent closed in normal condition, and open the second vent when venting gases flow from inside of the module case to the second vent.

In another aspect of the present disclosure, the second vent may be only open in an outward direction of the battery module.

In another aspect of the present disclosure, the second vent may be larger in size than the venting hole.

In another aspect of the present disclosure, the outer fire resistant sheet may be a flame retardant sheet.

The present disclosure further provides a battery pack comprising at least one battery module according to the above-described embodiment.

The present disclosure further provides a vehicle comprising at least one battery pack according to the above-described embodiment.

### Advantageous Effects

According to the present disclosure, it may be possible to improve safety of the battery module or battery pack.

In particular, according to an aspect of the present disclosure, a multilayer fire resistant and flame retardant structure may be formed by the inner fire resistant sheet and the outer fire resistant sheet.

Furthermore, according to an embodiment of the present disclosure, in the event of thermal runaway, the event module may allow smooth venting of high temperature gases and flames in the module, and prevent destruction of the module case structure.

Additionally, the battery module adjacent to the event module may prevent high temperature gases and flames produced from the event module from entering the module.

Accordingly, it may be possible to improve safety of the battery module or battery pack by controlling chain reactions of thermal events between battery modules.

The present disclosure may have many other effects, and its description will be provided in each exemplary configuration, or regarding effects that can be easily inferred by those skilled in the art, the corresponding description is omitted.

That is, the effects that may be obtained through the present disclosure are not limited to the above-described effects, and these and other effects will be clearly understood by those skilled in the art from the following description.

### BRIEF DESCRIPTION OF THE DRAWINGS

The accompanying drawings illustrate exemplary embodiments of the present disclosure and together with the following detailed description, serve to provide a further understanding of the technical aspect of the present disclosure, and thus the present disclosure should not be construed as being limited to the drawings.
FIG. 1 is an assembled perspective view schematically showing a battery module according to an embodiment of the present disclosure.
FIG. 2 is an exploded perspective view schematically showing a battery module according to an embodiment of the present disclosure.
FIG. 3 is an exploded perspective view of parts of a battery module according to an embodiment of the present disclosure.
FIG. 4 is a diagram illustrating a battery cell included in a battery module according to an embodiment of the present disclosure.
FIG. 5 is a diagram illustrating a module case and an inner fire resistant sheet according to an embodiment of the present disclosure.
FIG. 6 is a diagram illustrating a module case and an outer fire resistant sheet according to an embodiment of the present disclosure.
FIG. 7 is an enlarged view of section A in FIG. 6.
FIG. 8 is a diagram illustrating a vent path of venting gases when a thermal event occurs inside of a battery module according to an embodiment of the present disclosure.
FIG. 9 is a diagram illustrating a process of preventing the infiltration of venting gases when a thermal event occurs outside of a battery module according to an embodiment of the present disclosure.
FIG. 10 is a diagram illustrating an outer fire resistant sheet according to an embodiment of the present disclosure when assembled.
FIG. 11 is a diagram showing a suppression effect of gas or flame propagation in two or more battery modules according to an embodiment of the present disclosure.
FIG. 12 is a diagram illustrating a battery pack including the battery module of FIG. 1.
FIG. 13 is a diagram illustrating a vehicle including the battery pack of FIG. 12.

### DETAILED DESCRIPTION

Hereinafter, exemplary embodiments of the present disclosure will be described in detail with reference to the accompanying drawings. Prior to the description, it should be understood that the terms or words used in the specification and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

Therefore, the embodiments described herein and the illustrations in the accompanying drawings are an exemplary embodiment of the present disclosure to describe the technical aspect of the present disclosure and are not intended to be limiting, and thus it should be understood that a variety of other equivalents and modifications could have been made thereto at the time that the application was filed.

Additionally, to help the understanding of the present disclosure, some elements in the accompanying drawings may be depicted in exaggerated dimensions, not in actual scale.

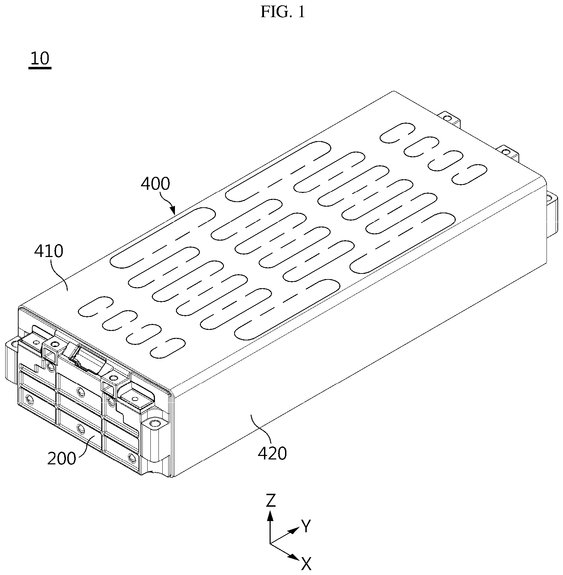

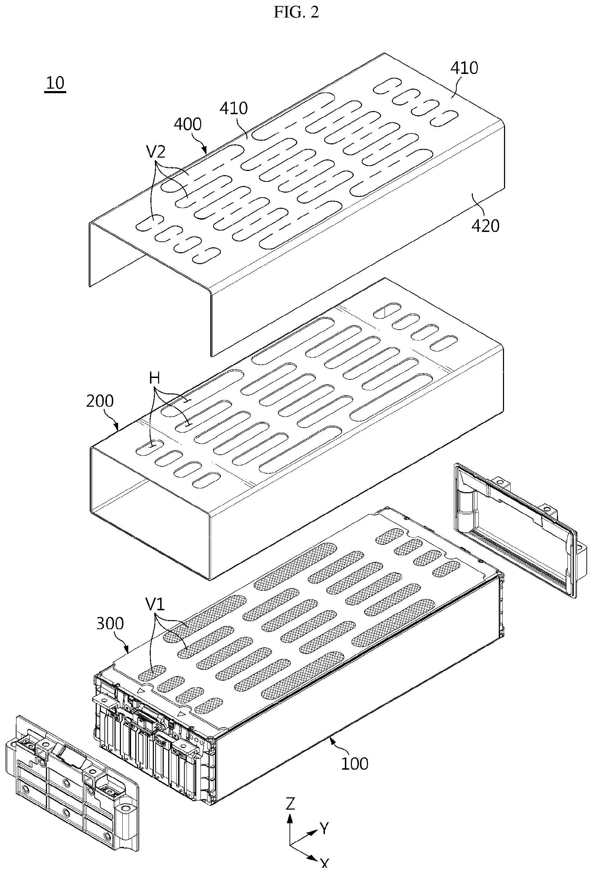

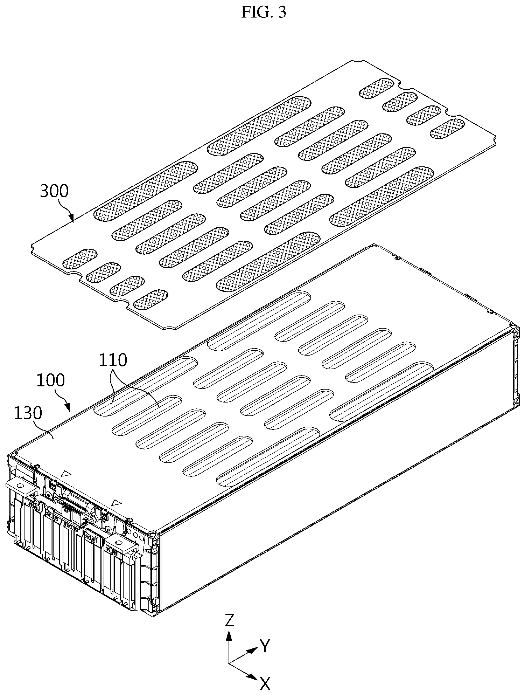

FIG. 1 is an assembled perspective view schematically showing a battery module 10 according to an embodiment of the present disclosure. FIG. 2 is an exploded perspective view schematically showing the battery module 10 according to an embodiment of the present disclosure. FIG. 3 is an exploded perspective view of parts of the battery module 10 according to an embodiment of the present disclosure.

Referring to FIGS. 1 to 3, the battery module 10 according to the present disclosure includes a cell assembly 100, a module case 200, an inner heat resistant sheet 300 and an outer heat resistant sheet 400.

The cell assembly 100 may include a plurality of battery cells 110. The plurality of battery cells 110 may be stacked in at least one direction. More specifically, the plurality of battery cells 110 may be arranged at least in the horizontal direction. The plurality of battery cells 110 may be arranged in parallel in the horizontal direction while standing in the vertical direction.

Hereinafter, each of the plurality of battery cells 110 will be described in more detail.

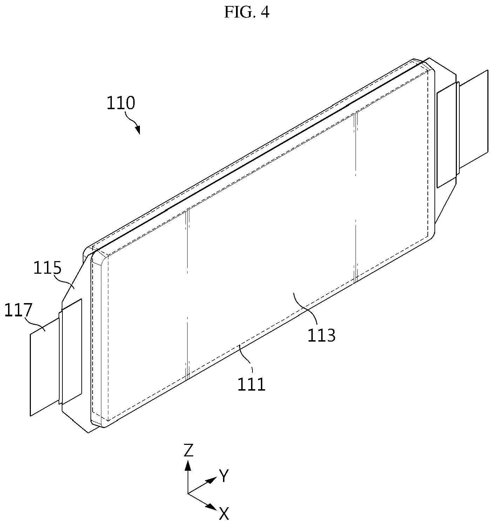

FIG. 4 is a diagram illustrating the battery cell 110 included in the battery module 10 according to an embodiment of the present disclosure.

Referring to FIG. 4, the battery cell 110 may be a secondary battery, for example, a pouch-type battery cell 110. However, the battery cell 110 of the present disclosure is not limited to a specific type, and may include any other type of battery cell 110, for example, such as a cylindrical cell or a prismatic cell.

The following description is made based on a pouch-type cell as an example of the battery cell 110 as shown in FIG. 4. Referring to FIG. 4, the battery cell 110 may include an electrode assembly 111, an accommodation portion 113 accommodating the electrode assembly 111, a sealing portion 115 formed on the periphery of the accommodation portion 113 and a pair of electrode leads 117 connected to the electrode assembly 111 and extending from the sealing portion 115.

The pair of electrode leads 117 may be coupled to an electrode tab (not shown) of the electrode assembly 111, and may extend from the sealing portion 115 through the sealing portion 115. The pair of electrode leads 117 may extend along the lengthwise direction of the battery cell 110. The pair of electrode leads 117 may extend in the same direction or opposite direction.

Referring to FIG. 4, the battery cell 110 may be configured to vent venting gases through the top sealing portion 115. The sealing portion 115 may have a venting area to prevent the rising internal pressure due to gases produced in the battery cell 110. The venting area is formed in a part of the sealing portion 115 and is structurally vulnerable than any other area to allow it to easily rupture when the internal pressure is applied. For example, the venting area may have poor sealing than the surrounding area. In this instance, the venting area may be formed at one of the two edges of the sealing portion 115. In particular, the venting area may be formed at the top edge among the two edges of the sealing portion 115.

By the above-described structure, gases produced in the battery cell 110 may exit the battery cell 110 through the venting area formed on the top of the battery cell 110. Accordingly, gases may exit the battery module 10 via the module case 200, the inner heat resistant sheet 300 and the outer heat resistant sheet 400 disposed on the top of the battery cell 110. That is, by the above-described structure, high temperature gases and flames in the module may be smoothly vented.

In an aspect of the present disclosure, the cell assembly 100 may include the plurality of battery cells 110, a bottom plate, a busbar assembly 130 and a side plate.

For example, the plurality of battery cells 110 may include at least one group of a predetermined number of battery cells 110. In this instance, the bottom plate may support the plurality of battery cells 110 on bottom of the plurality of battery cells 110.

Referring to FIG. 3, the cell assembly 100 of the present disclosure may include the busbar assembly 130 to electrically connect the plurality of battery cells 110. The busbar assembly 130 may be disposed on one side of the cell assembly 100 and electrically connected to the plurality of battery cells 110. The busbar assembly 130 may include a top plate to cover the top of the cell assembly 100. Here, the top plate may have a plurality of holes each disposed at a location corresponding to the location of a venting hole H of the inner heat resistant sheet 300. Referring to FIG. 3, the top sealing portion 115 of the battery cell 110 may be seen through the plurality of holes. That is, the plurality of holes of the busbar assembly 130 may be located near the top sealing portion 115 of the battery cell 110.

By the above-described structure, when high temperature gases are produced due to a thermal event occurred in the battery cell 110, gases may be vented through the plurality of holes of the top plate of the busbar assembly 130. That is, gases vented through the plurality of holes may be vented through the first venting hole H of the inner heat resistant sheet 300.

Meanwhile, the side plate may be disposed between the plurality of battery cells 110 and/or on the side of the cell assembly 100. The side plate may have a plate shape that is approximately flat in contact with the accommodation portion 113 of the battery cell 110. The side plate may play a role in vertically supporting the battery cells 110 inside and outside of the cell assembly 100.

Referring to FIG. 2, the module case 200 may have an empty internal space in which the cell assembly 100 may be received. For example, the module case 200 may include a tubular mono frame disposed around upper, lower and left and right sides of the cell assembly 100 and an end frame covering front and rear open ends of the mono frame.

The module case 200 may have a venting hole H as indicated by H. The venting hole H may pass through the module case 200 in the thicknesswise direction so the internal space of the module case 200 may be in communication with the external space.

In an aspect of the present disclosure, referring to FIG. 2, the venting hole H may be formed in the upper side of the module case 200.

By the above-described structure, gases vented through the top sealing portion 115 of the battery cell 110 may exit the battery module 10 through the venting hole H on the upper side of the module case 200. That is, by the above-described structure, high temperature gases and flames in the module may be smoothly vented.

In another aspect of the present disclosure, referring to FIG. 2, the module case 200 may have a plurality of venting holes H. For example, the module case 200 may have the plurality of slit-shaped venting holes H along the sealing portion 115 of the battery cell 110 on the upper side of the module case 200.

By the above-described structure, when gases is produced in the battery module 10 even in large amounts, the gases may smoothly exit the battery module 10 through the plurality of venting holes H. Additionally, due to the venting holes H having the slit shaped structure along the sealing portion 115 of the battery cell 110, gases vented from the sealing portion 115 of the battery cell 110 may be directly vented through the venting holes H. That is, it may be possible to minimize the residence time of venting gases in the module case 200.

Referring to FIG. 3, the inner heat resistant sheet 300 may be interposed between the module case 200 and the cell assembly 100. In particular, the inner heat resistant sheet 300 may be disposed in the internal space of the module case 200 and configured to cover at least one side of the cell assembly 100 received in the internal space of the module case 200. In particular, the inner heat resistant sheet 300 may be configured to cover at least the upper side of the cell assembly 100.

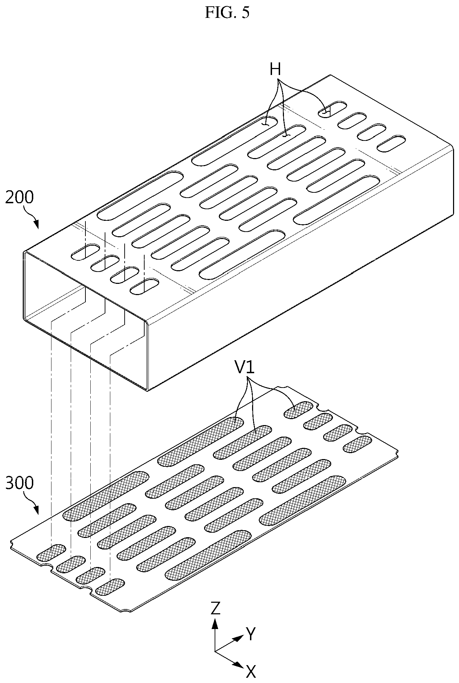

FIG. 5 is a diagram illustrating the module case 200 and the inner fire resistant sheet 300 according to an embodiment of the present disclosure.

Referring to FIG. 5, in an aspect of the present disclosure, the inner heat resistant sheet 300 may have a first vent V1 at a location corresponding to the venting hole H. The first vent V1 may be configured to allow gases to freely move in and out. The first vent V1 of the inner heat resistant sheet 300 may have configuration that matches the venting hole H of the module case 200, for example, location, size and shape corresponding to the venting hole H of the module case 200.

By the above-described structure, gases vented through the top sealing portion 115 of the battery cell 110 may exit the battery module 10 through the first vent V1 on the upper side of the inner heat resistant sheet 300. That is, by the above-described structure, high temperature gases and flames in the module may be smoothly vented.

In another aspect of the present disclosure, referring to FIG. 2, the inner heat resistant sheet 300 may be disposed on the inner side of a portion of the module case 200 in which the venting hole H is formed. Accordingly, the inner heat resistant sheet 300 may be configured to cover the outer side of a portion of the cell assembly 100 corresponding to the venting hole H.

In still another aspect of the present disclosure, referring to FIG. 2, the first vent V1 may include a mesh.

By the above-described structure, it may be possible to easily vent high temperature gases produced from the cell assembly 100, and the mesh may prevent sparks produced from the cell assembly 100 from moving out of the cell assembly 100. Additionally, it may be possible to prevent fire spread to the other battery module 10 adjacent to the battery module 10 in which the thermal event occurred.

Meanwhile, the inner heat resistant sheet 300 may be made of a fire resistant material, for example, mica, or may partially include such a material, in order to withstand high temperature heat or flames.

The outer heat resistant sheet 400 may be disposed on the outer side of the module case 200. The outer heat resistant sheet 400 may be configured to cover at least the upper side of the module case 200. In particular, the outer heat resistant sheet 400 may be configured to cover at least the portion in which the venting hole H is formed outside of the module case 200. That is, the outer heat resistant sheet 400 may be configured to cover the side in which the venting hole H of the module case 200 is formed on the outer side.

The outer heat resistant sheet 400 may include a fire resistant material to withstand high temperature heat or flames. For example, the outer heat resistant sheet 400 may be made of mica or may partially include mica.

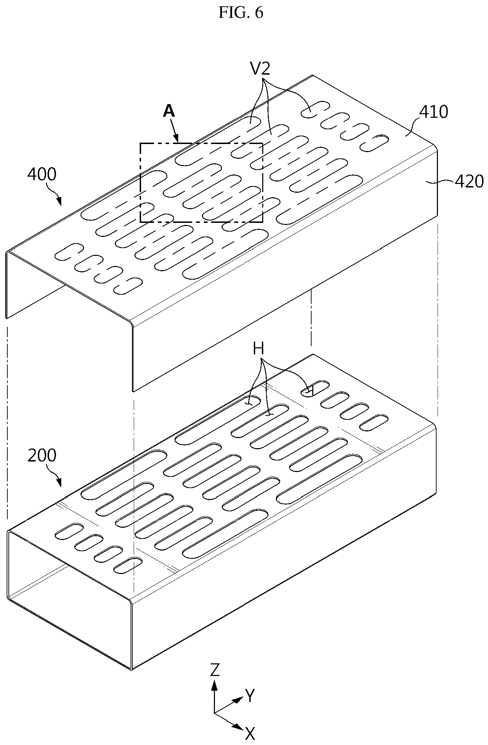

FIG. 6 is a diagram illustrating the module case 200 and the outer fire resistant sheet 400 according to an embodiment of the present disclosure.

Referring to FIG. 6, the outer heat resistant sheet 400 may include a top sheet 410 to cover the top of the module case 200 and a side sheet 420 to cover the side of the module case 200. For example, the top sheet 410 and the side sheet 420 may be connected to each other, and in the connected state, may be bent. Additionally, the outer heat resistant sheet 400 may be configured to cover at least a portion of the top of the module case 200 and at least a portion of the side. That is, the top sheet 410 may cover the top of the module case 200. The side sheet 420 may cover the side of the module case 200.

For example, the outer heat resistant sheet 400 may be a single sheet having two bent ends covering the upper plate, the left plate and the right plate of the mono frame.

By the above-described structure, since the outer heat resistant sheet 400 completely covers the sides of the module case 200, it may be possible to effectively prevent heat transfer to the adjacent battery module 10.

Referring to FIG. 6, in an aspect of the present disclosure, the outer heat resistant sheet 400 may have a second vent V2 at a location corresponding to the venting hole H. The second vent V2 may be disposed in the top sheet 410 of the outer heat resistant sheet 400.

The second vent V2 of the outer heat resistant sheet 400 may have configuration that matches the venting hole H of the module case 200, for example, location and shape corresponding to the venting hole H of the module case 200.

By the above-described structure, gases vented through the top sealing portion 115 of the battery cell 110 may exit the battery module 10 through the second vent V2 on the upper side of the outer heat resistant sheet 400. That is, by the above-described structure, high temperature gases and flames in the module may be smoothly vented.

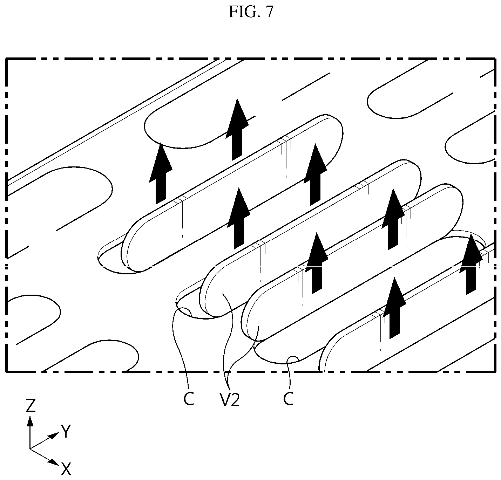

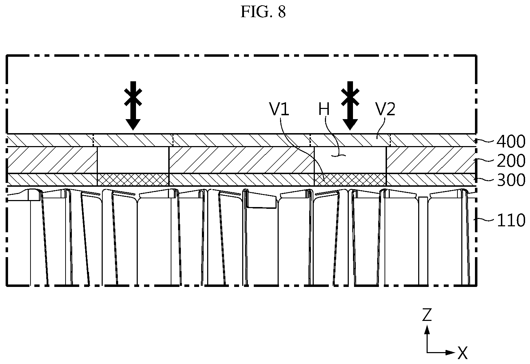

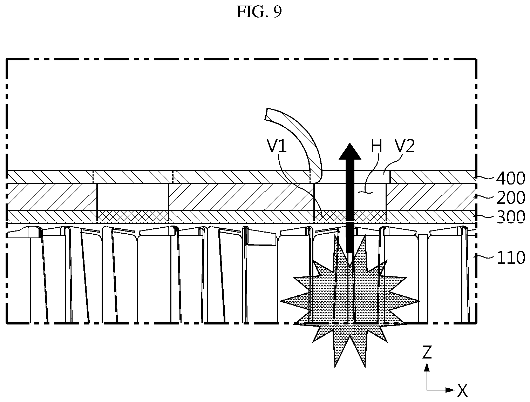

FIG. 7 is an enlarged view of section A in FIG. 6. FIG. 8 is a diagram illustrating a vent path of venting gases when thermal event occurs inside of the battery module 10 according to an embodiment of the present disclosure, and FIG. 9 is a diagram illustrating a process of preventing the infiltration of venting gases when thermal event occurs outside of the battery module 10 according to an embodiment of the present disclosure.

In another aspect of the present disclosure, the outer heat resistant sheet 400 may be configured to keep the second vent V2 closed in normal condition, and open the second vent V2 when venting gases flow from the inside of the module case 200 to the second vent V2.

More specifically, the second vent V2 is kept closed in normal condition as shown in FIG. 7. For example, a pre-cut line C may be formed around the second vent V2 as shown in FIG. 7. The pre-cut line C may have a smaller thickness or lower density than the surrounding area of the top sheet 410 to cause a rupture to easily occur. Accordingly, in normal condition, the outer heat resistant sheet 400 may cover the module case 200 with the pre-cut line C unruptured as shown in FIG. 8.

By the above-described structure, since the outer heat resistant sheet 400 covers the module case 200, when thermal event occurs in the adjacent battery module 10, it may be possible to prevent high temperature gases and flames produced from the adjacent battery module 10 from entering the corresponding battery module 10. Accordingly, it may be possible to effectively prevent thermal runaway chain reaction. Accordingly, it may be possible to ensure safety of the battery module 10 and a battery pack 1.

Meanwhile, when venting gases flows from the inside of the module case 200 to the second vent V2, the second vent V2 may be opened. Accordingly, gases vented through the top sealing portion 115 of the battery cell 110 may exit the battery module 10 through the second vent V2 on the upper side of the outer heat resistant sheet 400. That is, by the above-described structure, high temperature gases and flames in the module may be smoothly vented.

More specifically, describing with reference to FIG. 9, when venting gases are emitted from the battery cell 110 received in the module case 200, venting gases may go through the first vent V1 and the venting hole H and move to the second vent V2. In this instance, the second vent V2 is kept closed by the outer heat resistant sheet 400, but the corresponding portion of the outer heat resistant sheet 400 may be opened or ruptured by the pressure of the venting gases. Accordingly, the second vent V2 may be open. That is, the outer heat resistant sheet 400 may be configured to open the second vent V2 when the internal pressure of the module case 200 is equal to or higher than a predetermined level due to venting gases.

By the above-described structure, in normal condition, the outer heat resistant sheet 400 covers the module case 200, thereby preventing high temperature gases and flames produced from the adjacent battery module 10 from entering the corresponding battery module 10 in case of thermal event in the adjacent battery module 10, and when thermal event occurs in the corresponding battery module 10, it may be possible to easily vent gases produced in the battery module 10 by opening the second vent V2.

As a result, gases produced in the battery module 10 may smoothly exit the battery module 10 by the first vent V1 and the second vent V2. Accordingly, it may be possible to prevent the structure of the module case 200 from being destroyed by high temperature gases and flames produced in the battery module 10.

In still another aspect of the present disclosure, the second vent V2 may be only open in the outward direction of the battery module 10.

Describing with reference to FIG. 9, the second vent V2 may be kept closed in normal condition, and may be opened by the internal pressure of the battery module 10 when gases are produced due to the thermal event occurred inside of the battery module 10. In this instance, the second vent V2 may be open in the outward direction of the battery module 10 as shown in FIG. 9. For example, when the pressure in the battery module 10 increases by gases produced in the battery module 10, the pre-cut line C of the second vent V2 shown in FIG. 7 may rupture and the second vent V2 may be open outwards.

By the above-described structure, when gases are produced due to the thermal event occurred inside of the battery module 10, it may be possible to efficiently vent the gases out the battery module 10.

The second vent V2 may not be open in the inward direction of the battery module 10. Describing with reference to FIG. 8, when gases are produced due to the thermal event occurred outside of the battery module 10, the outer heat resistant sheet 400 may be subjected to external pressure in the inward direction of the battery module 10. Even in this case, the second vent V2 of the present disclosure may not be open in the inward direction of the battery module 10. That is, the second vent V2 may be only open in the outward direction of the battery module 10.

Accordingly, by the above-described structure, when thermal event occurs in the battery module 10 adjacent to the corresponding battery module 10, it may be possible to prevent high temperature gases and flames produced from the adjacent battery module 10 from entering the corresponding battery module 10. That is, by the above-described structure, it may be possible to protect the battery module 10 from high temperature, high pressure gases and flames produced from the battery module 10 in which the thermal event occurred. Accordingly, it may be possible to suppress the spread of thermal runaway events between modules. As a result, it may be possible to protect the battery module 10 through the outer heat resistant sheet 400 outside of the battery module 10, thereby controlling the chain reaction event and ensuring safety of the battery pack 1.

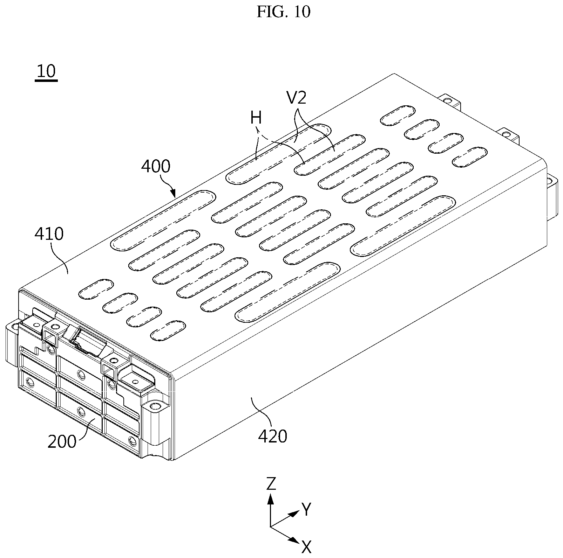

FIG. 10 is a diagram illustrating the outer fire resistant sheet 400 according to an embodiment of the present disclosure when assembled.

Referring to FIG. 10, the second vent V2 may be larger in size than the venting hole H.

The second vent V2 of the outer heat resistant sheet 400 may have configuration that matches the venting hole H of the module case 200, for example, location and shape corresponding to the venting hole H of the module case 200. For example, referring to FIG. 10, the second vent V2 and the venting hole H may have an oval or elliptical shape extending in a direction. The second vent V2 and the venting hole H may be formed at corresponding locations. That is, the second vent V2 and the venting hole H may be located on the same line in the vertical direction. Here, the second vent V2 may have the same center as the venting hole H and a larger size than the venting hole H.

By the above-described structure, since gases vented through the venting hole H directly move to a portion of the second vent V2, the second vent V2 may be easily opened.

Additionally, in case where the external pressure of the battery module 10 increases by high temperature gases or flames outside of the battery module 10, since the size of the second vent V2 is larger than the size of the venting hole H, when the second vent V2 ruptures, the venting hole H may be completely covered by the second vent V2. That is, since the second vent V2 completely covers the venting hole H, it may be possible to effectively prevent high temperature gases or flames produced outside of the battery module 10 from entering the battery module 10.

According to an aspect of the present disclosure, it may be possible to improve safety of the battery module 10 or the battery pack 1 including a plurality of battery modules 10. It will be described with further reference to FIG. 4.

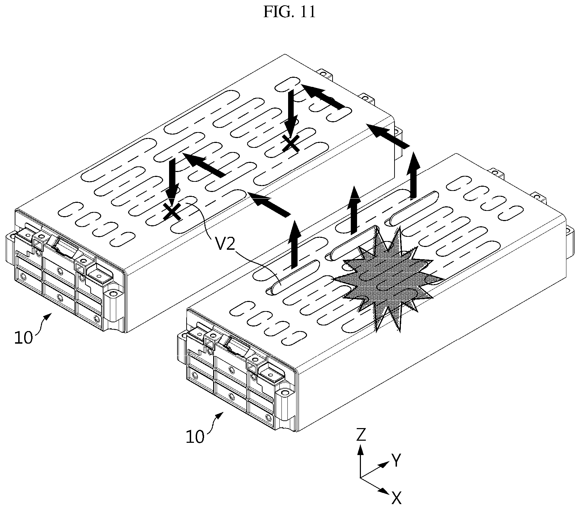

FIG. 11 is a diagram showing the suppression effect of gas or flame propagation in two or more battery modules 10 according to an embodiment of the present disclosure.

Referring to FIG. 11, when venting gases and flames are emitted from any of two adjacent battery modules 10 (the battery module 10 in which thermal runaway event occurred), the propagation of gases and flames to the adjacent other battery module 10 (the battery module 10 adjacent to the battery module 10 in which the thermal runaway event occurred) may be suppressed.

Describing in more detail, the battery module 10 in which the thermal runaway event occurred produces heat, high pressure gases and flames as the event progresses, and the heat, high pressure gases and flames may be vented through the venting hole H of the module case 200 of the corresponding battery module 10. In this instance, since the first vent V1 of the inner heat resistant sheet 300 of the battery module 10 in which the event occurred matches the venting hole H, the structure may not be destroyed by high temperature gases and flames. That is, according to the present disclosure, through the first vent V1 of the inner heat resistant sheet 300, the venting hole H of the module case 200 and the second vent V2 of the outer heat resistant sheet 400, high temperature gases and/or flames produced in the battery module 10 may easily exit the battery module 10, thereby effectively preventing explosion, breakage or destruction of the module case 200 caused by the increased internal pressure of the battery module 10. Accordingly, the structure of the module case 200 may be stably maintained, thereby preventing explosion or structure destruction of the battery module 10 in which the thermal runaway event occurred.

Additionally, the battery module 10 adjacent to the battery module 10 in which the thermal runaway event occurred may be protected from high temperature, high pressure gases and flames produced from the battery module 10 in which the thermal runaway event occurred through the outer heat resistant sheet 400 that protects the outer side of the module case 200. Accordingly, it may be possible to suppress the spread of the thermal runaway event between modules.

That is, the module adjacent to the battery module 10 in which the thermal runaway event occurred may be protected through the outer heat resistant sheet 400 outside of the module to prevent high temperature gases and flames produced from the battery module 10 in which the thermal runaway event occurred from entering the module, thereby controlling the chain reaction event and ensuring safety of the battery pack 1. That is, the outer heat resistant sheet 400 acts as a vent path of gases and flames in the battery module 10 in which the thermal runaway event occurred for the battery module 10 in which the thermal runaway event occurred in the same way as the inner heat resistant sheet 300, but may prevent the infiltration of flames and gases transferred from the battery module 10 in which the thermal runaway event occurred for the battery module 10 adjacent to the battery module 10 in which the thermal runaway event occurred.

In an aspect of the present disclosure, the outer heat resistant sheet 400 may be a flame retardant sheet. That is, according to an aspect of the present disclosure, the inner heat resistant sheet 300 on the inner side of the module case 200 and the flame retardant sheet on the outer side of the outer heat resistant sheet 400 may form a multilayer fire resistant and flame retardant structure.

The outer heat resistant sheet 400 may be made of a flame retardant material and/or a fire resistant material, for example, mica, or may partially include such a material in order to withstand high temperature heat or flames.

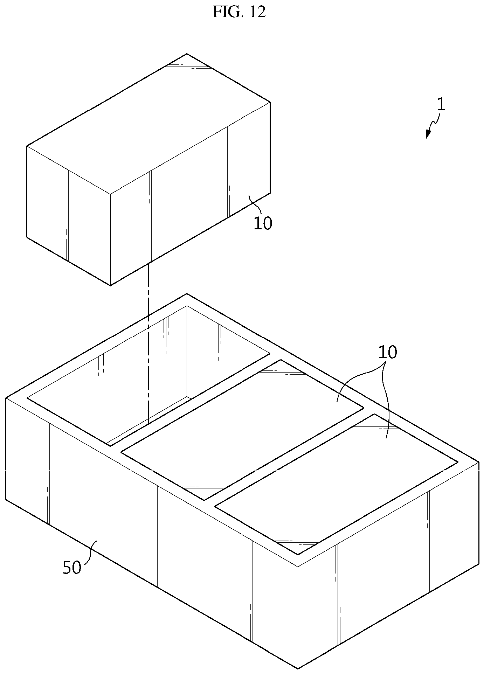

FIG. 12 is a diagram illustrating the battery pack 1 including the battery module 10 of FIG. 1.

Referring to FIG. 12, the battery pack 1 according to the present disclosure may include at least one battery module 10 according to the present disclosure as described above. Additionally, the battery pack 1 according to the present disclosure may include a pack case 50 accommodating the at least one battery module 10. In addition to the battery module 10, the battery pack 1 may further include any other component, for example, the components of the battery pack 1 known at the time the application was filed, such as a battery management system (BMS), a pack case, a relay, a current sensor or the like.

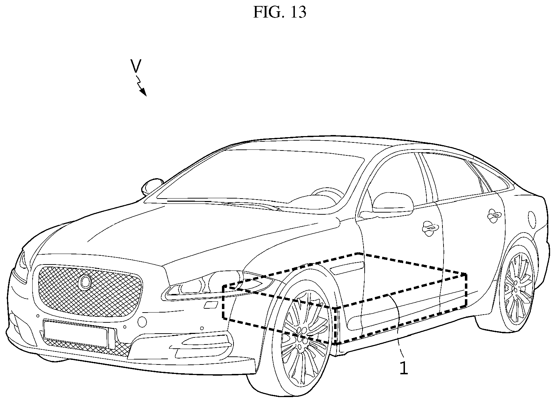

FIG. 13 is a diagram illustrating a vehicle V including the battery pack 1 of FIG. 12.

Referring to FIG. 13, the vehicle V according to the present disclosure may include at least one battery pack 1 according to the present disclosure.

The battery module 10 according to the present disclosure may be applied to the vehicle V such as an electric vehicle V or a hybrid electric vehicle V. That is, the vehicle V according to the present disclosure may include the battery module 10 according to the present disclosure or the battery pack 1 according to the present disclosure. Additionally, in addition to the battery module 10 or the battery pack 1, the vehicle V according to the present disclosure may further include any other component included in the vehicle V. For example, in addition to the battery module 10 according to the present disclosure, the vehicle V according to the present disclosure may further include a vehicle body, a motor, a control device such as an electronic control unit (ECU) or the like.

According to the above-described embodiments, it may be possible to improve safety of the battery module 10 or the battery pack 1. That is, according to an aspect of the present disclosure, the multilayer fire resistant and flame retardant structure may be formed by the inner heat resistant sheet 300 and the outer heat resistant sheet 400. Accordingly, according to the present disclosure, in the event of thermal runaway, the event module may allow smooth venting of high temperature gases and flames in the module, and prevent the structure destruction of the module case 200. Additionally, the battery module 10 adjacent to the event module may prevent high temperature gases and flames produced from the event module from entering the module. Accordingly, it may be possible to improve safety of the battery module 10 or the battery pack 1 by controlling the chain reaction of the thermal event between the battery modules 10. Accordingly, according to the above-described embodiments, it may be possible to provide the battery module 10 with improved stability, and the battery pack 1 and the vehicle V including the same.

The terms indicating directions such as upper and lower are used for convenience of description, but it is obvious to those skilled in the art that the terms may change depending on the position of the stated element or an observer.

While the present disclosure has been hereinabove described with regard to a limited number of embodiments and drawings, the present disclosure is not limited thereto and it is apparent that a variety of changes and modifications may be made by those skilled in the art within the technical aspect of the present disclosure and the scope of the appended claims and their equivalents.

**[Description of Reference Numerals]**

| | | | |
|---|---|---|---|
| V: | Vehicle | 1: | Battery pack |
| 10: | Battery module | 50: | Pack case |
| 100: | Cell assembly | 110: | Battery cell |
| 111: | Electrode assembly | 113: | Accommodation portion |
| 115: | Sealing portion | 117: | Electrode lead |
| 130: | Busbar assembly | | |
| 200: | Module case | H: | Venting hole |
| 300: | Inner fire resistant sheet | V1: | First vent |
| 400: | Outer fire resistant sheet | V2: | Second vent |
| 410: | Top sheet | 420: | Side sheet |

## Claims

1. A battery module, comprising:
a cell assembly including a plurality of battery cells;
a module case having an internal space and a venting hole, wherein the cell assembly is received in the internal space;
an inner fire resistant sheet interposed between the module case and the cell assembly; and
an outer fire resistant sheet configured to cover at least a portion in which the venting hole is formed outside of the module case.

2. The battery module according to claim 1, wherein the plurality of battery cells is configured to vent venting gases through a top sealing portion.

3. The battery module according to claim 1, wherein a plurality of the venting holes is formed in an upper side of the module case.

4. The battery module according to claim 1, wherein the cell assembly includes the plurality of battery cells arranged in a horizontal direction, and
wherein the inner fire resistant sheet is configured to cover an upper side of the cell assembly.

5. The battery module according to claim 1, wherein the inner fire resistant sheet has a first vent at a location corresponding to the venting hole.

6. The battery module according to claim 5, wherein the first vent includes a mesh.

7. The battery module according to claim 1, wherein the outer fire resistant sheet includes:
a top sheet covering a top of the module case; and
a side sheet covering a side of the module case.

8. The battery module according to claim 1, wherein the outer fire resistant sheet has a second vent at a location corresponding to the venting hole.

9. The battery module according to claim 8, wherein the outer fire resistant sheet is configured to keep the second vent closed in normal condition, and open the second vent when venting gases flow from inside of the module case to the second vent.

10. The battery module according to claim 8, wherein the second vent is only open in an outward direction of the battery module.

11. The battery module according to claim 8, wherein the second vent is larger in size than the venting hole.

12. The battery module according to claim 1, wherein the outer fire resistant sheet is a flame retardant sheet.

13. A battery pack comprising at least one battery module according to any one of claims 1 to 12.

14. A vehicle comprising at least one battery pack according to claim 13.
